# EUROPÄISCHE PATENTANMELDUNG

(11) **EP 2 894 385 A1**
(43) Veröffentlichungstag der Anmeldung: **15.07.2015**
(21) Anmeldenummer: 14188655.6
(22) Anmeldetag: 13.10.2014
(51) Int. Cl.: F16L 55/035, F16L 3/10

(54) **Rohrschelle**

(30) Priorität: 13.01.2014 DE 202014000265 U
(71) Anmelder: Metallwarenfabrik Marktoberdorf GmbH & Co. KG, 87616 Marktoberdorf (DE)
(72) Erfinder: Abfalter, Jörg, 87616 Marktoberdorf (DE)
(74) Vertreter: Weickmann & Weickmann

(57) **Zusammenfassung**

Die Erfindung betrifft eine Rohrschelle zur Befestigung eines Rohres an einer Wand, umfassend einen Wandmontageabschnitt (5), zwei mit dem Wandmontageabschnitt (5) einstückig zusammenhängende bogenförmige Klemmschenkel (7, 9), die einen C-förmigen Umgriff mit einem Umschlingungswinkel (α) von mehr als 180° bilden und elastisch auseinanderspreizbar sind, und einen bogenförmigen Schließbügel (17) zur Überbrückung des Abstandes (11) zwischen den vom Wandmontageabschnitt (5) entfernten Enden (13, 15) der Klemmschenkel (7, 9), wobei die Klemmschenkel (7, 9) eine U-förmige Aufnahme (16) bilden, in der ein bandförmiges Andruckelement (37) aus einem elastomeren Material aufgenommen ist, und auch der Schließbügel (17) eine U-förmige Aufnahme bildet, in welcher ein bandförmiges Andruckelement (45) aus einem elastomeren Material aufgenommen ist und ferner an einem Ende an einem (7) der Klemmschenkel (7, 9) schwenkbar zwischen einer Öffnungsstellung und einer Schließstellung befestigt ist.

## Beschreibung

Die Erfindung betrifft eine Rohrschelle zur Befestigung eines Rohres bestimmter Querschnittsform und -größe an einer Wand.

Rohrschellen, wie sie z. B. zur Befestigung von Regenwasserfallrohren an Gebäudewänden verwendet werden, sind in zahlreichen Ausgestaltungen bekannt. Ein klassisches Ausführungsbeispiel einer Fallrohrschelle weist zwei halbkreisförmige Bügel auf, die durch ein Klappscharnier miteinander verbunden sind und an ihren vom Klappscharnier entfernten Enden Befestigungslaschen für eine Verbindungsschraube aufweisen. Einer der halbkreisförmigen Bügel weist als Befestigungsmittel zur Montage der Fallrohrschelle an einer Gebäudewand eine Schraubmutter oder eine Schraube auf, die um einen Viertelkreis gegenüber dem Klappscharnier versetzt von dem betreffenden halbkreisförmigen Bügel radial nach außen absteht. Zum Öffnen der Rohrschelle können die beiden halbkreisförmigen Bügel um die Gelenkachse des Klappscharniers aufgeklappt werden. Zum Schließen der Fallrohrschelle werden die halbkreisförmigen Bügel wieder zusammengeklappt, so dass die an deren Enden nach außen abstehenden Befestigungslaschen zusammenkommen und mittels der gemeinsamen Befestigungsschraube aneinander fixiert werden können.

Es sind auch Bauformen derartiger Rohrschellen bekannt, bei denen rohrschelleninnenseitig umlaufend ringsegmentförmige Schallschutz- und Toleranzausgleichselemente aus Gummi angeordnet sind. Zur Fixierung solcher Gummiteile an dem metallischen Rohrschellenkörper sind diese häufig so am Rohrschellenkörper angebracht, dass sie dessen Umfangsränder außen übergreifen, indem sie die Ränder des Rohrschellenkörpers in betreffenden Nuten aufnehmen. Derartige Schallschutzelemente sind relativ kompliziert geformt und insbesondere nicht einfach an dem metallischen Rohrschellenkörper in ihrer Sollposition anzubringen.

Ferner weisen die meisten bekannten Rohrschellen Aussteifungssicken auf, die in Umfangsrichtung der Rohrschellen verlaufen. Derartige herkömmliche Rohrschellen haben oft ein nur durch ihre Funktionalität geprägtes Aussehen und bieten mit ihrem Design keinen ansprechenden ästhetischen Gesamteindruck.

Es sind auch bereits Rohrschellen bekannt, die als Klemme mit einem Umschlingungswinkel von mehr als 180° für das zu befestigende Rohr ausgebildet sind, wobei ihre Klemmschenkel auseinanderspreizbar sind, um das Rohr in die Rohrschelle einzubringen. Ein gesonderter Schließbügel kann dann auf die Enden der Klemmschenkel aufgeklipst werden, so dass die Rohrschelle das darin aufgenommene Rohr vollständig umschließt und klemmend hält. Gummielemente können innenseitig an der Rohrschelle angeklebt sein, um einen Toleranzausgleich zwischen Rohrschelle und darin aufgenommenem Rohr herzustellen.

Aufgabe der vorliegenden Erfindung ist es, zur Befestigung eines Rohres bestimmter Querschnittsform und -größe an einer Wand eine Rohrschelle, insbesondere Fallrohrschelle, bereitzustellen, welche einfach und kostengünstig herstellbar ist, einfach und sicher handhabbar ist, um ein Rohr damit zu befestigen, welche ferner gute Schallschutz- und Toleranzausgleichsmöglichkeiten zwischen Rohr und Rohrschelle bietet und darüberhinaus einen ansprechenden ästhetischen Gesamteindruck vermittelt.

Zur Lösung dieser Aufgabe wird gemäß der vorliegenden Erfindung eine Rohrschelle zur Befestigung eines Rohres bestimmter Querschnittsform und -größe an einer Wand vorgeschlagen, umfassend
- einen Wandmontageabschnitt zur Anbringung der Rohrschelle an einer Wand,
- zwei mit dem Wandmontageabschnitt monolithisch einstückig zusammenhängende und von dem Wandmontageabschnitt abstehende bogenförmige Klemmschenkel, die zusammen mit dem Wandmontageabschnitt einen C-förmigen Umgriff für das zu
   befestigende Rohr mit einem Umschlingungswinkel von mehr als 180° bilden und zur Aufnahme des Rohres in die Rohrschelle unter Vergrößerung des Abstandes zwischen ihren vom Wandmontageabschnitt entfernten Enden elastisch nachgiebig auseinanderspreizbar sind, und
- einen bogenförmigen Schließbügel zur Überbrückung des Abstandes zwischen den vom Wandmontageabschnitt entfernten Enden der Klemmschenkel,
- wobei die Klemmschenkel an ihren vom Wandmontageabschnitt zu den davon entfernten Klemmschenkelenden verlaufenden Außenrändern zum Rohrschelleninneren hin abgekantet sind, so dass sie eine im Querschnitt U-förmige Aufnahme bilden, in der rohrschelleninnenseitig ein ringsegmentförmig gebogenes, bandförmiges Andruckelement aus einem gummiartigen oder elastomeren Material aufgenommen oder einlegbar ist, so dass es über die Abkantungen hinweg rohrschelleninnenseitig absteht,
   wobei die Anordnung aus C-förmigem Umgriff und Andruckelement als Klemme so dimensioniert und geformt ist, dass sie von sich aus eine Klemmwirkung auf ein darin aufgenommenes Rohr mit der bestimmten Querschnittsgröße und -form ausüben kann, und
- wobei auch der bogenförmige Schließbügel entsprechend den Klemmschenkeln an seinen Außenrändern abgekantet ist, um eine im Querschnitt U-förmige Aufnahme zu bilden, in welcher ein ringsegmentförmig gebogenes, bandförmiges Andruckelement aus einem gummiartigen oder elastomeren Material aufgenommen oder einlegbar ist,
- wobei der Schließbügel ferner an einem seiner Enden vermittels eines Scharniers an einem der Klemmschenkel schwenkbar zwischen einer den Abstand zwischen den Klemmschenkelenden freigebenden Öffnungsstellung und einer den Abstand zwischen den Klemmschenkelenden überbrückenden Schließstellung befestigt ist, so dass er auch in der Öffnungsstellung an dem einen Klemmschenkel gesichert verbleibt, und wobei der Schließbügel an seinem von der Scharnieranordnung entfernten Ende ein Schnappverbindungselement aufweist, das mit einem dazu komplementären, an dem Ende des anderen Klemmschenkels angeordneten Schnappverbindungselement eine Schnappverbindung eingehen kann, um den Schließbügel in der Schließstellung zu sichern.

Bei der erfindungsgemäßen Rohrschelle handelt es sich um eine selbstklemmende Rohrschelle, bei der die beiden bogenförmigen Klemmschenkel elastisch nachgiebig auseinanderspreizbar sind, um ein Rohr der betreffenden Größe zwischen sich aufnehmen und schließlich nach Wegnahme der Aufspreizkraft klemmend halten zu können. Die Klemmschenkel sind an ihren in Rohrschellenumfangsrichtung verlaufenden Rändern zum Rohrschelleninneren hin um vorzugsweise 90° abgekantet, so dass sie eine im Querschnitt U-förmige Aufnahme bilden, in der das gummiartige bzw. elastomere Andruckelement aufgenommen ist. Durch die Randabkantungen ist somit eine einfache Nut für die Aufnahme des gummiartigen bzw. elastomeren Andruckelements geschaffen. Das als Schallschutz- und Tolerenzausgleichselement vorgesehene Andruckelement kann eine sehr einfache Bandform mit rechteckigem Querschnitt haben und völlig unkompliziert in die seitlich von den Abkantungen begrenzte Aufnahmenut eingelegt werden. Die jeweiligen Andruckelemente sind so dimensioniert, dass sie in den betreffenden Aufnahmenuten passend aufgenommen werden können, so dass sie darin einen ausreichend sicheren Halt haben und ferner über die Abkantungen hinweg rohrschelleninnenseitig vorstehen. Die Abkantungen bieten darüberhinaus eine am Rohrschellenumfang laufende mechanische Stabilisierung der Rohrschelle, was die oft unansehnlichen Stabilisierungssicken bekannter Rohrschellen überflüssig macht.

Dies gilt auch für den Schließbügel, der entsprechende Randabkantungen aufweist und in der dadurch begrenzten Aufnahmenut ein betreffendes gummiartiges oder elastomeres Andruckelement aufnimmt. Dieser Schließbügel ist an einem seiner Enden vermittels eines Scharniers an einem der Klemmschenkel schwenkbar zwischen einer den Abstand zwischen den Klemmschenkelenden freigebenden Öffnungsstellung und einer den Abstand zwischen den Klemmschenkeleneden überbrückenden Schließstellung befestigt, so dass er auch in der Öffnungsstellung an dem einen Klemmschenkel gesichert verbleibt. Der Schließbügel kann somit bei der Rohrmontage nicht versehentlich herabfallen oder verloren gehen. Beim Schließen der Rohrschelle kommt das Schnappverbindungselement des Schließbügels mit dem dazu komplementären Schnappverbindungselement des betreffenden Klemmschenkels in Eingriff, um eine sichere Schnappverbindung einzugehen. Die Rohrschelle nach der Erfindung ist somit im Hinblick auf das Schließen der Rohrschelle montagefreundlich und einfach zu handhaben.

Das Konstruktionsprinzip der Rohrschelle nach der Erfindung macht es möglich, die Klemmschenkel und den Schließbügel rohrschellenaußenseitig zwischen den abgekanteten Außenrändern verstärkungssickenfrei glatt und ohne Löcher auszubilden. Eine derartige Ausführungsform bietet einen besonders ansprechenden ästhetischen Eindruck.

Die Klemmschenkel und der monolithisch einstückig damit zusammenhängende Wandmontageabschnitt sind gemäß einer besonders bevorzugten Ausführungsform aus einem gemeinsamen Metallblechteil geformt. Dies kann ein Edelstahlblechteil, ein Aluminiumblechteil, ein Zinkblechteil oder ein Kupferblechteil sein und bietet eine besonders kostengünstige Möglichkeit der Herstellung der Rohrschelle durch einen Kaltumformprozess in einer automatischen Blechumformvorrichtung. Auch die klemmschenkelseitige Komponente des Scharniers und das klemmschenkelseitige Schnappverbindungselement können aus dem gemeinsamen Metallblechteil geformt sein und monolithisch einstückig mit dem Wandmontageabschnitt und den Klemmschenkeln zusammenhängen. Auch diese Maßnahme trägt zur kostengünstigen Herstellung der Rohrschelle bei. Auch der Schließbügel und die schließbügelseitige Komponente des Scharniers und das schließbügelseitige Schnappverbindungselement sind vorzugsweise aus einem gemeinsamen Metallblechteil monolithisch einstückig zusammenhängend geformt. Daraus ergeben sich ebenfalls die schon genannten Vorteile einer kostengünstigen und vereinfachten Herstellung. Es sei aber darauf hingewiesen, dass auch eine Ausführung der Rohrschelle aus Kunststoff gefertigt sein kann.

Der Wandmontageabschnitt ist gegenüber einer Bogenlinie, auf der die beiden Klemmschenkel mit ihrem Außenumfang liegen, radial nach außen versetzt und ist an seinen zwischen den Klemmschenkeln verlaufenden Außenrändern zum Rohrschelleninneren hin abgekantet, so dass er eine kastenförmige Aufnahme für eine darin untergebrachte Schraubmutter für eine Rohrschellenhalteschraube bildet. Er hat ferner ein Durchgangsloch, durch welches hindurch eine Rohrschellenhalteschraube von außen mit der Schraubmutter verschraubt werden kann. Bevorzugt ist eine Ausführungsform, bei der das Durchgangsloch ein Langloch ist und die Schraubmutter in der kastenförmigen Aufnahme des Wandmontageabschnittes in Längsrichtung des Langloches verschiebbar untergebracht ist. Dies ermöglicht eine Justierung der Rohrschelle in Bezug auf die Anordnung einer bereits im Mauerwerk verankerten Rohrschellenhalteschraube und in Bezug auf das in der Rohrschelle aufzunehmende Rohr.

Die Schraubmutter kann auf einfache Weise gegen Herausfallen aus der kastenförmigen Aufnahme gesichert werden, indem der Wandmontageabschnitt zweifach abgekantet ist, nämlich zum Rohrschelleninneren hin abgekantete Randbereiche aufweist, die an ihren äußeren Enden zusätzlich aufeinander zu weisend abgekantet sind, um die Schraubmutter rohrschelleninnenseitig gegen Herausfallen sichernd zu hintergreifen. Das Einlegen der Schraubmutter in die kastenförmige Aufnahme und das nachfolgende Hinterkanten der Schraubmutter mittels der aufeinander zu weisend abgekanteten Ränder des Wandmontageabschnittes können in einem Montage- und Umformautomaten leicht automatisiert durchgeführt werden.

Die Rohrschelle nach der Erfindung ist vorzugsweise so ausgestaltet, dass der Wandmontageabschnitt und der Abstand zwischen den davon entfernten Klemmschenkelenden einander diametral gegenüberliegen.

Die Klemmschenkel sollten einen gemeinsamen Bogen mit einem Bogenmaß zwischen 4,2 und 4,7, vorzugsweise von etwa 4,4 bilden. Dies entspricht einem Umschlingungswinkel α von etwa 255°. Bei einer so gestalteten Rohrschelle können die Klemmschenkel mit geringem Aufwand auseinandergespreizt werden, um ein Rohr ins Rohrschelleninnere einzubringen. Andererseits bieten sie einen sicheren Halt für das in der Rohrschelle aufgenommene Rohr, welcher durch den Schließbügel stabilisiert und gesichert wird. In seiner bevorzugten Standardausführung dient die Rohrschelle zur Befestigung von Rohren mit Kreisquerschnitt.

Die Erfindung wird nachstehend unter Bezugnahme auf die Figuren näher erläutert.
- Fig. 1: zeigt eine Rohrschelle nach der Erfindung in einer perspektivischen Ansicht.
- Fig. 2: zeigt die Rohrschelle aus Fig. 1 in Draufsicht mit in Öffnungsstellung aufgeklapptem Schließbügel.
- Fig. 3: zeigt eine Vorderansicht der Rohrschelle aus Fig. 1, wobei verdeckte Linien gestrichelt eingezeichnet sind.
- Fig. 4: zeigt eine Schnittansicht der Rohrschelle aus Fig. 1 mit der in Fig. 5 bei IV - IV angedeuteten Schnittebene.
- Fig. 5: zeigt die Rohrschelle in Draufsicht, wobei der Schließbügel unmittelbar vor Verriegelung in seiner korrekten Schließstellung dargestellt ist.
- Fig. 6a: zeigt das in Fig. 5 mit VI markierte Detail in vergrößerter Darstellung.
- Fig. 6b: zeigt das Detail aus Fig. 6a nach Herstellen der Schnappverbindung zwischen Schließbügel und betreffendem Klemmschenkel.

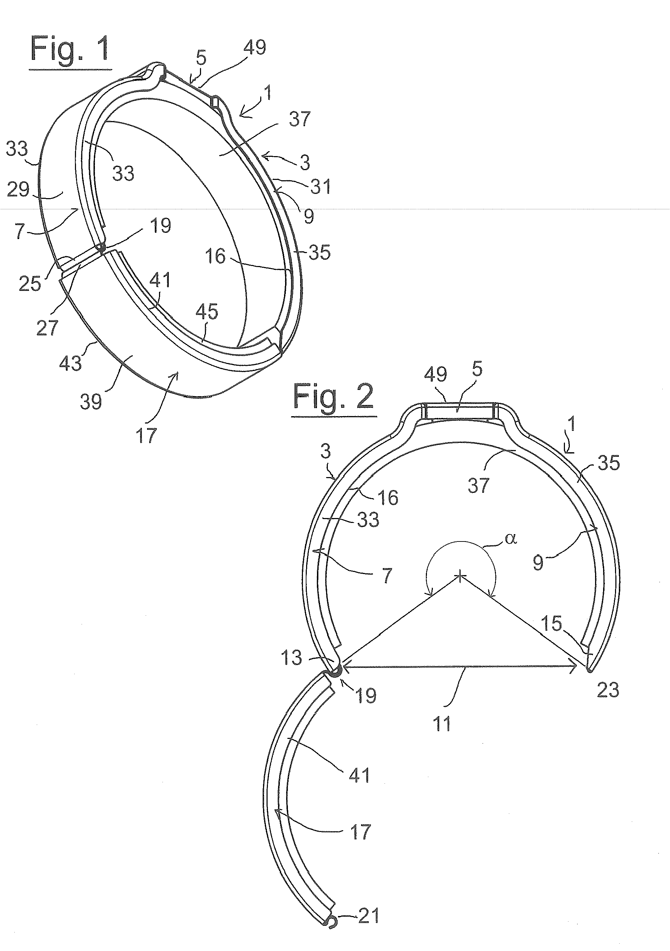

Die gezeigte Rohrschelle nach der Erfindung weist einen metallischen Rohrschellenkörper 3 mit einem Wandmontageabschnitt 5 und zwei mit dem Wandmontageabschnitt 5 monolithisch einstückig zusammenhängende und von dem Wandmontageabschnitt 5 abstehende bogenförmige Klemmschenkel 7, 9 auf, die zusammen mit dem Wandmontageabschnitt 5 einen C-förmigen Umgriff für das zu befestigende Rohr (nicht gezeigt) mit einem Umschlingungswinkel α von etwa 255° bilden. Zur Aufnahme des Rohres in die Rohrschelle können die Klemmschenkel 7, 9 unter Vergrößerung des Abstandes 11 zwischen ihren vom Wandmontageabschnitt 5 entfernten Enden 13, 15 elastisch nachgiebig auseinandergespreizt werden, wenn der Schließbügel 17 in seiner Öffnungsstellung gemäß Fig. 2 ist.

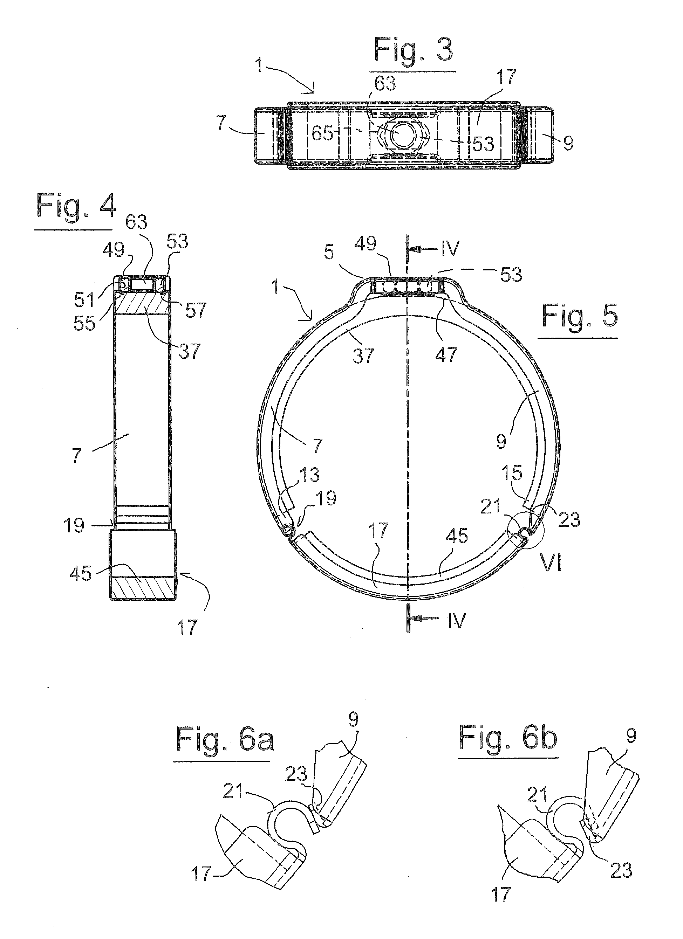

Ein Scharnier 19 zwischen dem Klemmschenkel 7 und dem Schließbügel 17 hält den Schließbügel 17 verliersicher an dem metallischen Rohrschellenkörper 3 und ermöglicht ein Verschwenken des Schließbügels 17 aus der in Fig. 2 gezeigten Öffnungsstellung in die Schließstellung, die in der Darstellung gemäß Fig. 5 im Wesentlichen erreicht ist. Beim Übergang in die korrekte Schließstellung kommt es zu einer Schnappverbindung zwischen dem Schließbügel 17 und dem Klemmschenkel 9. Als schließbügelseitiges Schnappverbindungselement ist ein näherungsweise hufeisenförmiger Haken 21 an dem Schließbügel 17 angeformt (vgl. Fig. 5, Fig. 6a und 6b). An dem Klemmschenkel 9 ist ein komplementäres Hakenelement 23 angeformt, welches von dem Hakenelement 21 bei Herstellung der Schnappverbindung hinterschnappt wird (vgl. Fig. 6b). Bei Annäherung der Hakenelemente 21 und 23 wird das Hakenelement 21 von dem Hakenelement 23 zunächst etwas zusammengedrückt (Fig. 6a), bis es schließlich an dem Hakenelement 23 vorbeigekommen ist und letzteres dann hintergreifen kann (Fig. 6b). Diese Schnappverbindung ist bei Bedarf mit einem Werkzeug, etwa Schraubenzieher lösbar, der von außen auf das Hakenelement 21 drückt, um dieses aus dem Eingriff mit dem Hakenelement 23 herauszuhebeln und gegen ein Wiederverrasten mit dem Hakenelement 23 zu verhindern. Die Schnappverbindung kann jedoch danach bei Bedarf wiederhergestellt werden.

Das Scharnier 19 besteht aus einer an dem Klemmschenkel 7 angeformten klemmschenkelseitigen Komponente 25 und einer an dem Schließbügel 17 angeformten schließbügelseitigen Komponente 27. Die Komponenten 25, 27 sind so rundgebogen und ineinander verhakt, dass sie eine Schwenkbewegung der Schließbügel 17 relativ zum Klemmschenkel 7 ermöglichen und dennoch den Schließbügel 17 verliersicher an dem Klemmschenkel 7 halten.

Die Klemmschenkel 7, 9 haben einen im Wesentlichen kreisförmigen Verlauf und sind an ihren Außenumfangsseiten 29, 31 sickenfrei glatt und ohne Löcher ausgebildet.

An ihren Außenrändern 33, 35 sind die Klemmschenkel 7, 9 um etwa 90° nach innen abgekantet, so dass sie eine im Querschnitt U-förmige Aufnahme bilden, in der ein ringsegmentförmig gebogenes, bandförmiges Andruckelement 37 aus einem gummiartigen Material passend aufgenommen ist. Dieses auch als Schallschutzelement dienende Andruckelement 37 verläuft in der U-förmigen Aufnahme vom scharnierseitigen Ende des Klemmschenkels 7 bis zum schnappverbindungsseitigen Ende des Klemmschenkels 9 auch entlang des Wandmontageabschnittes 5.

Auch der Schließbügel 17 ist an seiner Außenumfangsseite 39 verstärkungssickenfrei glatt und ohne Löcher ausgebildet und weist ebenfalls Randabkantungen 41, 43 auf, zwischen denen ein gummiartiges Andruck- und Schallschutzelement 45 aufgenommen ist.

Der Wandmontageabschnitt 5 ist gegenüber einer Bogenlinie 47 (Fig. 5), die den Außenumfangslinien der Klemmschenkel 7, 9 folgt und diese miteinander verbindet, radial nach außen versetzt ausgebildet und hat eine im Wesentlichen ebene Außenwand 49. Ausgehend von dieser Außenwand 49 ist der Wandmontageabschnitt 5 an seinen Rändern ebenfalls nach innen hin um etwa 90° abgekantet, so dass er eine kastenförmige Aufnahme 51 für eine darin untergebrachte Schraubmutter 53 für eine (nicht gezeigte) Rohrschellenhalteschraube bildet. Die äußersten Ränder 55, 57 der Wandmontageabschnittsabkantungen sind abermals um etwa 90° abgekantet, um die Schraubmutter 53 sichernd zu hintergreifen, wie dies in Fig. 4 am besten zu erkennen ist.

Die Schraubmutter 53 ist in der kastenförmigen Aufnahme 51 verschiebbar, jedoch nicht um mehr als eine viertel Drehung drehbar gesichert aufgenommen. Ihr zentrales Schraubloch 63 befindet sich in Flucht mit einem Langloch 65 (Fig. 3), welches in der Außenwand 49 des Wandmontageabschnittes 5 vorgesehen ist und durch welches hindurch eine Rohrschellenhalteschraube von außen mit der Schraubmutter 53 verschraubt werden kann. Die Schraubmutter 53 ist in Bezug auf das Langloch verschiebbar, um die Rohrschelle 1 beim Befestigen an einer Rohrschellenhalteschraube justieren zu können.

Der Wandmontageabschnitt 5 mit den Klemmschenkeln 7, 9 und den daran angeformten Komponenten 25 und 23 des Scharniers bzw. der Schnappverbindung sind aus einem gemeinsamen Blechteil geformt worden und hängen monolithisch einstückig zusammen. Auch der Schließbügel 17 mit seiner Scharnierkomponente 27 und der Schnappverbindungskomponente 21 sind aus einem gemeinsamen Blechteil geformt worden und hängen monolithisch einstückig zusammen.

Die Rohrschelle nach der Erfindung lässt sich kostengünstig und mit geringem Aufwand herstellen, ist montagefreundlich und weist ein gefälliges Design mit sickenfrei und öffnungsfrei glatten Außenumfangsflächen der Klemmschenkel 7, 9 und des Schließbügels 17 auf, wobei die Abkantungen an den betreffenden Rändern den Rohrschellenmetallkörper 3 bzw. den Schließbügel als aus einem massiveren, dickeren Blech hergestellt erscheinen lässt, was ebenfalls dem Design in positiver Weise zugute kommt.

## Patentansprüche

1. Rohrschelle zur Befestigung eines Rohres bestimmter Querschnittsform und -größe an einer Wand, umfassend
- einen Wandmontageabschnitt (5) zur Anbringung der Rohrschelle (1) an einer Wand,
- zwei mit dem Wandmontageabschnitt (5) monolithisch einstückig zusammenhängende und von dem Wandmontageabschnitt (5) abstehende bogenförmige Klemmschenkel (7, 9), die zusammen mit dem Wandmontageabschnitt (5) einen C-förmigen Umgriff für das zu befestigende Rohr mit einem Umschlingungswinkel (α) von mehr als 180° bilden und zur Aufnahme des Rohres in die Rohrschelle (1) unter Vergrößerung des Abstandes (11) zwischen ihren vom Wandmontageabschnitt (5) entfernten Enden (13, 15) elastisch nachgiebig auseinanderspreizbar sind, und
- einen bogenförmigen Schließbügel (17) zur Überbrückung des Abstandes (11) zwischen den vom Wandmontageabschnitt (5) entfernten Enden (13, 15) der Klemmschenkel (7, 9),
- wobei die Klemmschenkel (7, 9) an ihren vom Wandmontageabschnitt (5) zu den davon entfernten Klemmschenkelenden (13, 15) verlaufenden Außenrändern zum Rohrschelleninneren hin abgekantet sind, so dass sie eine im Querschnitt U-förmige Aufnahme (16) bilden, in der rohrschelleninnenseitig ein ringsegmentförmig gebogenes, bandförmiges Andruckelement (37) aus einem gummiartigen oder elastomeren Material aufgenommen oder einlegbar ist, so dass es über die Abkantungen hinweg rohrschelleninnenseitig absteht,
- wobei die Anordnung aus C-förmigem Umgriff und Andruckelement (37) als Klemme so dimensioniert und geformt ist, dass sie von sich aus eine Klemmwirkung auf ein darin aufgenommenes Rohr mit der bestimmten Querschnittsgröße und -form ausüben kann, und wobei auch der bogenförmige Schließbügel (17) entsprechend den Klemmschenkeln an seinen Außenrändern abgekantet ist, um eine im Querschnitt U-förmige Aufnahme zu bilden, in welcher ein ringsegmentförmig gebogenes, bandförmiges Andruckelement (45) aus einem gummiartigen oder elastomeren Material aufgenommen oder einlegbar ist,
- wobei der Schließbügel (17) ferner an einem seiner Enden vermittels eines Scharniers (19) an einem (7) der Klemmschenkel (7, 9) schwenkbar zwischen einer den Abstand (11) zwischen den Klemmschenkelenden (13, 15) freigebenden Öffnungsstellung und einer den Abstand (11) zwischen den Klemmschenkelenden (13, 15) überbrückenden Schließstellung befestigt ist, so dass er auch in der Öffnungsstellung an dem einen Klemmschenkel (7) gesichert verbleibt, und wobei der Schließbügel (17) an seinem von der Scharnieranordnung (19) entfernten Ende ein Schnappverbindungselement (21) aufweist, das mit einem dazu komplementären, an dem Ende des anderen Klemmschenkels (9) angeordneten Schnappverbindungselement (21) eine Schnappverbindung eingehen kann, um den Schließbügel (17) in der Schließstellung zu sichern.

2. Rohrschelle nach Anspruch 1, wobei die Klemmschenkel (7, 9) und der Schließbügel (17) rohrschellenaußenseitig zwischen den abgekanteten Außenrändern sickenfrei glatt und vorzugsweise ohne Löcher ausgebildet sind.

3. Rohrschelle nach Anspruch 1 oder 2, wobei die Klemmschenkel (7, 9) und der monolithisch einstückig damit zusammenhängende Wandmontageabschnitt (5) aus einem gemeinsamen Metallblechteil, vorzugsweise Edelstahlblechteil, geformt sind.

4. Rohrschelle nach Anspruch 3, wobei die klemmschenkelseitige Komponente (25) des Scharniers (19) und das klemmschenkelseitige Schnappverbindungselement (29) ebenfalls aus dem gemeinsamen Metallblechteil geformt sind und monolithisch einstückig mit dem Wandmontageabschnitt (5) und den Klemmschenkeln (7, 9) zusammenhängen.

5. Rohrschelle nach einem der vorhergehenden Ansprüche, wobei der Schließbügel (17) und die schließbügelseitige Komponente (27) des Scharniers (19) und das schließbügelseitige Schnappverbindungselement (21) aus einem gemeinsamen Metallblechteil, vorzugsweise Edelstahlblechteil monolithisch einstückig zusammenhängend geformt sind.

6. Rohrschelle nach einem der vorhergehenden Ansprüche, wobei der Wandmontageabschnitt (5) an seinen zwischen den Klemmschenkeln (7, 9) verlaufenden Außenrändern (33, 35) zum Rohrschelleninneren hin abgekantet ist, so dass er eine kastenförmige Aufnahme (51) für eine darin untergebrachte Schraubmutter (53) für eine Rohrschellenhalteschraube bildet, und wobei der Wandmontageabschnitt (5) ein Durchgangsloch (65) aufweist, durch welches hindurch eine Rohrschellenhalteschraube von außen mit der Schraubmutter (53) verschraubt werden kann.

7. Rohrschelle nach Anspruch 4, wobei das Durchgangsloch (65) ein Langloch ist und wobei die Schraubmutter (53) in der kastenförmigen Aufnahme in Längsrichtung des Langloches (65) verschiebbar untergebracht ist.

8. Rohrschelle nach Anspruch 4 oder 5, wobei die Schraubmutter (53) gegen Herausfallen gesichert in der kastenförmigen Aufnahme (51) untergebracht ist.

9. Rohrschelle nach Anspruch 6, wobei zur Sicherung der Schraubmutter (53) der Wandmontageabschnitt (5) zum Rohrschelleninneren hin abgekantete Randbereiche aufweist, die an ihren äußeren Enden (bei 55, 57) zusätzlich aufeinander zu weisend abgekantet sind, um die Schraubmutter (53) rohrschelleninnenseitig gegen Herausfallen sichernd zu hintergreifen.

10. Rohrschelle nach einem der vorhergehenden Ansprüche, wobei der Wandmontageabschnitt (5) und der Abstand (11) zwischen den davon entfernten Klemmschenkelenden (13, 15) einander diametral gegenüberliegen.

11. Rohrschelle nach einem der vorhergehenden Ansprüche, wobei die Klemmschenkel (7, 9) und der Wandverbindungsabschnitt (5) gemeinsam einen Umschlingungswinkel (α) mit einem Bogenmaß zwischen 4,2 und 4,7, vorzugsweise von etwa 4,4 bilden.
